# EUROPEAN PATENT APPLICATION

(11) **EP 4 750 145 A1**
(43) Date of publication of application: **27.05.2026**
(21) Application number: 24855351.3
(22) Date of filing: 11.05.2024
(51) Int. Cl.: H04W 28/14

(54) **COMMUNICATION METHOD, APPARATUS AND SYSTEM**

(30) Priority: 18.08.2023 CN 202311049427
(71) Applicant: Huawei Technologies Co., Ltd., Shenzhen, Guangdong 518129 (CN)
(72) Inventor: YANG, Liping, Shenzhen, Guangdong 518129 (CN); YE, Jiyu, Shenzhen, Guangdong 518129 (CN); XIAO, Shuqin, Shenzhen, Guangdong 518129 (CN); HE, Ning, Shenzhen, Guangdong 518129 (CN)
(74) Representative: Gill Jennings & Every LLP
(86) International application number: PCT/CN2024/092518
(87) International publication number: WO 2025/039621

(57) **Abstract**

This application provides a communication method, apparatus, and system. The method can provide a solution for supporting a terminal device in more appropriately buffering a service. The method includes: An access network device determines, based on a change in a status of a network between the access network device and a terminal device, whether the terminal device needs to buffer a service from a server in advance; and when determining that the terminal device needs to buffer the service from the server, the access network device sends, to the terminal device, indication information indicating that the terminal device needs to buffer the service from the server. The access network device indicates the terminal device to buffer the service from the server. In this way, this application can support the terminal device in more appropriately buffering the service from the server, and can effectively avoid too early or too late buffering.

## Description

This application claims priority to Chinese Patent Application No. 202311049427.6, filed with the China National Intellectual Property Administration on August 18, 2023 and entitled "COMMUNICATION METHOD, APPARATUS, AND SYSTEM", which is incorporated herein by reference in its entirety.

### TECHNICAL FIELD

This application relates to the field of communication technologies, and more specifically, to a communication method, apparatus, and system.

### BACKGROUND

Service transmission between a network device and a terminal device is easily affected by a change in a status of a network between the network device and the terminal device. Video playing is used as an example. A network signal between the terminal device and the network device may become better or worse as the terminal device moves. As a result, the terminal device may fail to play a video smoothly, affecting viewing experience of a user. Therefore, the terminal device may buffer a video. For example, a video application of the terminal device downloads a video from a content delivery network (content delivery network, CDN) server to a buffer in advance, and then a player of the terminal device reads and plays the video from the buffer, thereby ensuring smooth playing of the video.

However, too early buffering by the terminal device may lead to more traffic costs, and too late buffering by the terminal device may lead to poor user experience. Therefore, how to make the terminal device more appropriately buffer a service is an urgent technical problem to be resolved currently.

### SUMMARY

This application provides a communication method, apparatus, and system, to support a terminal device in more appropriately buffering a service.

According to a first aspect, a communication method is provided. The method includes: determining an indication message based on a status of a network between an access network device and a terminal device, where the indication message indicates the terminal device to buffer a first service; and sending the indication message to the terminal device.

The solution according to the first aspect may be executed by the access network device, or a chip, an integrated circuit, a module, or the like configured to perform a function of the access network device. This is not limited herein. For ease of description, the following uses the access network device as an example for description.

The access network device indicates the terminal device to buffer the first service. In this way, the terminal device may determine, based on the indication from the access network device, that the first service needs to be buffered. This can effectively avoid too early or too late buffering, thereby supporting the terminal device in more appropriately buffering the first service.

With reference to the first aspect, in a possible implementation, the method further includes: receiving a request message used for requesting the indication message.

In this way, the access network device may send the indication information to the terminal device based on the request from the terminal device.

With reference to the first aspect, in a possible implementation, the first service is a service provided by a server for the terminal device.

In this way, the terminal device may determine, based on the indication from the access network device, whether the service provided by the server needs to be buffered.

With reference to the first aspect, in a possible implementation, the indication message is used for requesting to buffer the first service.

When the indication information can be used for requesting to buffer the first service, the terminal device may directly forward the indication message to the server, so that processing the indication message by the terminal device can be avoided, thereby reducing power consumption of the terminal device.

According to a second aspect, a communication method is provided. The method includes: receiving an indication message, where the indication message indicates a terminal device to buffer a first service, and the first service is a service provided by a server for the terminal device; and sending a buffer request message to the server, where the buffer request message is used for requesting to buffer the first service, and the buffer request message is determined based on the indication message.

The solution according to the second aspect may be executed by the terminal device, or a chip, an integrated circuit, a module, or the like configured to perform a function of the terminal device. This is not limited herein. For ease of description, the following uses the terminal device as an example for description.

An access network device indicates the terminal device to buffer the first service. In this way, the terminal device may determine, based on the indication from the access network device, that the first service needs to be buffered. This can effectively avoid too early or too late buffering, thereby supporting the terminal device in more appropriately buffering the first service.

With reference to the second aspect, in a possible implementation, that the buffer request message is determined based on the indication message includes: The buffer request message is determined based on the indication message and measurement information, where the measurement information is information obtained by the terminal device by measuring a status of a network between the terminal device and the access network device.

In this way, the terminal device can obtain a more accurate buffer indication.

With reference to the second aspect, in a possible implementation, the buffer request message includes at least one of the following: a buffer notification of the first service or first buffer duration of the first service.

When the buffer request message includes the buffer notification of the first service, the terminal device indicates, to the server, that the first service is to be buffered, and the server may send a certain amount of data to the terminal device in advance based on the buffer notification. When the buffer request message includes the buffer duration of the first service, the terminal device may indicate information about specific buffer duration to the server, and the server may send, to the terminal device based on the buffer duration, an amount of data corresponding to the buffer duration.

According to a third aspect, a communication method is provided. The method includes: receiving an indication message, where the indication message indicates a terminal device to buffer a first service, and the first service is a service provided by a server for the terminal device; and sending the indication message to the server, where the indication message is used for requesting to buffer the first service.

The solution according to the third aspect may be executed by the terminal device, or a chip, an integrated circuit, a module, or the like configured to perform a function of the terminal device. This is not limited herein. For ease of description, the following uses the terminal device as an example for description.

An access network device indicates the terminal device to buffer the first service. In this way, the terminal device may determine, based on the indication from the access network device, that the first service needs to be buffered. This can effectively avoid too early or too late buffering, thereby supporting the terminal device in more appropriately buffering the first service.

With reference to the second aspect or the third aspect, in a possible implementation, the receiving the indication message includes: receiving the indication message from the access network device, or receiving the indication message from a core network device.

In this way, the terminal device may obtain the indication information in a plurality of ways.

With reference to any one of the first aspect to the third aspect, in a possible implementation, the indication message includes at least one of the following: status information of the network between the terminal device and the access network device, the buffer notification of the first service, or second buffer duration of the first service.

In this way, the access network device may indicate, based on one or more of the foregoing information, the terminal device to buffer the first service.

With reference to any one of the first aspect to the third aspect, in a possible implementation, the status information of the network includes at least one of the following: physical resource allocation, channel interference, link quality, or network resource consumption.

In this way, the terminal device may determine, based on one or more of the foregoing information, whether the first service needs to be buffered.

According to a fourth aspect, a communication apparatus is provided. The communication apparatus may be an access network device, or may be a device, a module, or the like configured to perform a function of the access network device.

With reference to the fourth aspect, in a possible implementation, the communication apparatus may include modules or units in one-to-one correspondence with the methods/operations/steps/actions described in the first aspect. The modules or units may be implemented by a hardware circuit, software, or a hardware circuit in combination with software.

The communication apparatus according to the fourth aspect may be further configured to perform the method according to any one of the first aspect.

According to a fifth aspect, a communication apparatus is provided. The communication apparatus may be a terminal device, or may be a device, a module, or the like configured to perform a function of the terminal device.

With reference to the fifth aspect, in a possible implementation, the communication apparatus may include modules or units in one-to-one correspondence with the methods/operations/steps/actions described in the second aspect or the third aspect. The modules or units may be implemented by a hardware circuit, software, or a hardware circuit in combination with software.

The communication apparatus according to the fifth aspect may be further configured to perform the method according to any one of the second aspect.

According to a sixth aspect, a communication apparatus is provided. The apparatus includes a processor. The processor is configured to cause, by executing a computer program or instructions or by using a logic circuit, the communication apparatus to perform the method according to any one of the first aspect and the possible implementations of the first aspect; the communication apparatus to perform the method according to any one of the second aspect and the possible implementations of the second aspect; or the communication apparatus to perform the method according to any one of the third aspect and the possible implementations of the third aspect.

With reference to the sixth aspect, in a possible implementation, the communication apparatus further includes a memory, and the memory is configured to store a computer program or instructions.

With reference to the sixth aspect, in a possible implementation, the communication apparatus further includes a communication interface, and the communication interface is configured to input and/or output a signal.

According to a seventh aspect, a communication apparatus is provided. The apparatus includes a logic circuit and an input/output interface. The input/output interface is configured to input and/or output a signal; and the logic circuit is configured to perform the method according to any one of the first aspect and the possible implementations of the first aspect; the logic circuit is configured to perform the method according to any one of the second aspect and the possible implementations of the second aspect; or the logic circuit is configured to perform the method according to any one of the third aspect and the possible implementations of the third aspect.

According to an eighth aspect, a computer-readable storage medium is provided. The computer-readable storage medium stores a computer program or instructions. When the computer program or the instructions are run on a computer, the method according to any one of the first aspect and the possible implementations of the first aspect is performed; or the method according to any one of the second aspect and the possible implementations of the second aspect is performed; or the method according to any one of the third aspect and the possible implementations of the third aspect is performed.

According to a ninth aspect, a computer program product including instructions is provided. When the instructions are run on a computer, the method according to any one of the first aspect and the possible implementations of the first aspect is performed; or the method according to any one of the second aspect and the possible implementations of the second aspect is performed; or the method according to any one of the third aspect and the possible implementations of the third aspect is performed.

According to a tenth aspect, a communication system is provided. The system includes an access network device and a server. The access network device is configured to perform the method according to any one of the first aspect and the possible implementations of the first aspect, and the server is configured to receive a buffer request message, an indication message, or the like from a terminal device.

Descriptions of beneficial effects of the fourth aspect to the tenth aspect may correspond to descriptions of beneficial effects of the first aspect to the third aspect.

### BRIEF DESCRIPTION OF DRAWINGS

FIG. 1 is a diagram of an applicable communication system 100 according to an embodiment of this application;
FIG. 2 is a diagram of a 5G network architecture 200 according to an embodiment of this application;
FIG. 3 is a schematic interaction flowchart of a communication method 300 according to an embodiment of this application;
FIG. 4 is a schematic interaction flowchart of a communication method 400 according to an embodiment of this application;
FIG. 5 is a schematic interaction flowchart of a communication method 500 according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a block diagram of a communication apparatus 800 according to an embodiment of this application;
FIG. 9 is a block diagram of a communication apparatus 900 according to an embodiment of this application; and
FIG. 10 is a block diagram of a communication apparatus 1000 according to an embodiment of this application.

### DESCRIPTION OF EMBODIMENTS

For ease of understanding embodiments of this application, the following descriptions are provided first.
1. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
2. Various numbers in this application are merely used for differentiation for ease of description, but are not intended to limit the scope of this application. Sequence numbers in this application do not mean an execution sequence, and the execution sequence of the processes should be determined based on functions and internal logic of the processes. For example, in the specification, claims, and accompanying drawings of this application, the terms "first", "second", "third", "fourth", and other various term numbers (if existent) are intended to distinguish between similar objects, but do not necessarily indicate a specific order or sequence. It should be understood that the data termed in such a way are interchangeable in proper circumstances, so that embodiments described herein can be implemented in an order other than the order illustrated or described herein.
3. The terms "include", "have", and any variants thereof are intended to cover a non-exclusive inclusion. For example, a process, method, system, product, or device that includes a series of steps or units is not necessarily limited to those expressly listed steps or units, but may include other steps or units not expressly listed or inherent to such a process, method, product, or device.
4. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in a plurality of manners, for example, but not limited to, the to-be-enabled information, such as the to-be-enabled information or an index of the to-be-enabled information, may be directly enabled. Alternatively, the to-be-enabled information may be indirectly enabled by enabling other information, where there is an association relationship between the other information and the to-be-enabled information. Alternatively, only a part of the to-be-enabled information may be enabled, and the other part of the to-be-enabled information is known or pre-agreed on. For example, specific information may be further enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.
5. "Storage" or "store" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.
6. "Protocols" in this application may be standard protocols in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited.
7. Arrows or blocks shown by dashed lines in the diagrams of the accompanying drawings in the specification of this application indicate optional steps or optional modules.
8. Any embodiment or design scheme described as "example" or "for example" in this application should not be explained as being more preferred or having more advantages than another embodiment or design scheme. Exactly, use of the term such as "example" or "for example" is intended to present a related concept in a specific manner for ease of understanding.
9. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

For a better understanding of the technical solutions in this application, the following description is provided from the following aspects: a communication system, a communication method, and a communication apparatus.

### I. Communication system

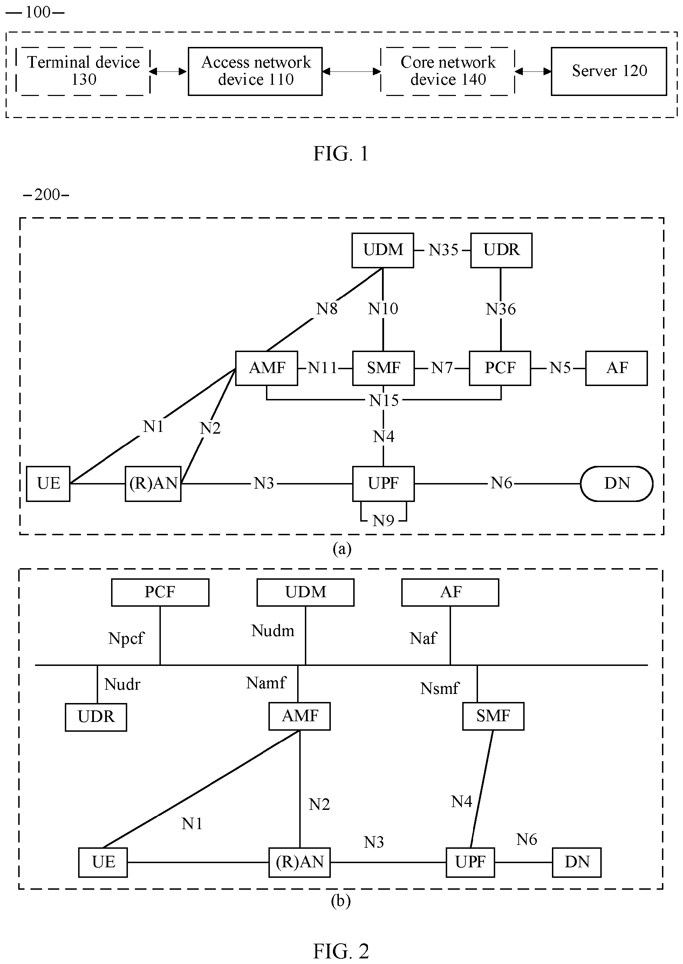

To resolve the technical problem mentioned in the background, this application provides an applicable communication system 100. As shown in FIG. 1, the communication system 100 includes an access network device 110 and a server 120. Optionally, the communication system 100 may further include a terminal device 130. Optionally, the communication system 100 may further include a core network device 140. The core network device 140 may separately interact with the access network device 110 and the terminal device 130. The terminal device 130 may interact with the server 120 via the access network device 110. For example, the server 120 transmits service data, like video service data, to the terminal device 130 via the access network device 110. The access network device 110 has a function of providing a network service for another device. For example, the another device may access a network via the access network device 110. In addition, the terminal device 130 is a terminal apparatus or a terminal device, and may be a device directly used by a user, or the like.

In the communication system 100, the access network device 110 is configured to determine an indication message 1 based on a status of a network between the access network device 110 and the terminal device 130. The indication message 1 indicates the terminal device 130 to buffer a first service, and the first service is a service provided by the server 120 for the terminal device 130. The access network device 110 is further configured to send the indication message 1 to the terminal device 130. The terminal device 130 is configured to receive the indication message 1, and send a buffer request message 1 or the indication message 1 to the server 120. The buffer request message 1 is used for requesting to buffer the first service, the buffer request message 1 is determined by the terminal device 130 based on the indication message 1, and the indication message 1 may be further used for requesting to buffer the first service. The server 120 is configured to receive the buffer request message 1 or the indication message 1 from the terminal device 130, and send data of the first service to the terminal device 130 based on the buffer request message 1 or the indication message 1, so that the terminal device 130 buffers the first service.

The access network device 110 may determine, based on a change in the status of the network between the access network device 110 and the terminal device 130, whether the terminal device 130 needs to buffer the first service. For example, when determining that the network between the access network device 110 and the terminal device 130 is to deteriorate in a future period, the access network device 110 may send the indication message 1 to the terminal device 130. In other words, the access network device 110 indicates, to the terminal device 130 by using the indication message 1, an occasion at which the terminal device 130 buffers the first service. In this way, the terminal device 130 can buffer the first service neither too early nor too late, so that the terminal device 130 can more appropriately buffer the first service. In addition, service transmission between the terminal device 130 and the server 120 can be prevented from being greatly affected by network deterioration.

The first service may be a video service, a voice service, another service easily affected by the change in the status of the network, or the like. This is not limited. For ease of description, an example in which the first service is a video service is used below for description, but another possible service is not limited.

For example, an example in which the first service is a video service is used. For example, when the network between the access network device 110 and the terminal device 130 is in a stable state at 10:00, the terminal device 130 may immediately obtain and play video data. In other words, a video application of the terminal device 130 does not obtain the video data from the server 120 in advance. For example, the video application of the terminal device 130 obtains the video data corresponding to 10:00 from the server 120 at 9:58, and plays the video data corresponding to 10:00 at 10:00. When the network between the access network device 110 and the terminal device 130 is to deteriorate in a period of [10:00, 10:35], the video application of the terminal device 130 may obtain video data corresponding to a period of [10:00, 10:40] from the server 120 at 9:58, and normally play video data in the period of [10:00, 10:35]. In this way, impact of network deterioration on video playing can be avoided.

In the foregoing descriptions, the "status of the network between the access network device 110 and the terminal device 130" may include comprehensive load information of the network between the access network device 110 and the terminal device 130, interference of the network between the access network device 110 and the terminal device 130, link quality of the network between the access network device 110 and the terminal device 130, consumption of resources of the network between the access network device 110 and the terminal device 130, and the like. The foregoing information can be used by the access network device 110 to predetermine whether the terminal device 130 needs to buffer the first service, that is, may be used by the access network device 110 to determine the indication message 1.

In an example, the comprehensive load information of the network indicates users served by the access network device 110. If there are a large quantity of served users and congestion occurs in the network, providing stable video streams for the users may be problematic. Correspondingly, the access network device 110 may notify the terminal device 130 to buffer information in advance. In another example, the link quality indicates whether the terminal device 130 suffers from interference, a degree of the interference, and strength of a wanted signal, and can reflect whether a video stream of the terminal device 130 can be played normally. If the video stream cannot be played stably, the access network device 110 may notify the terminal device 130 to buffer information in advance. In still another example, network resource consumption indicates consumption of resources of the network between the access network device 110 and the terminal device 130. The access network device 110 can view allocation of resources to users, indicating which spectrum resources are idle or busy and which spectrum resources are clean or subject to severe interference, and can further view operating and resource consumption of a central processing unit (central processing unit, CPU) and a board of the access network device 110. This also affects whether the access network device 110 can normally and stably provide a service for the terminal device 130.

In conclusion, the access network device 110 may comprehensively consider the foregoing pieces of information, and may configure a corresponding weight for each piece of information (for example, importance of the comprehensive load information of the network is higher than that of the link quality, so that the comprehensive load information of the network may be assigned a weight of 0.6, and the link quality may be assigned a weight of 0.3), to determine whether the access network device 110 needs to indicate the terminal device 130 to buffer the first service in advance. Further, the access network device 110 may determine information like buffer duration.

In a possible implementation, the indication message 1 may include but is not limited to: status information of the network between the terminal device 130 and the access network device 110, a buffer notification of the first service, or buffer duration of the first service.

When the indication message 1 includes the status information of the network between the terminal device 130 and the access network device 110, the terminal device 130 determines, based on the status information of the network (which may be the foregoing information like the comprehensive load information, interference, and link quality), whether the first service needs to be buffered. For example, if determining, based on the status information of the network, that the network between the access network device 110 and the terminal device 130 is to deteriorate in a future period, the terminal device 130 determines that the first service needs to be buffered, and determines the buffer duration based on a requirement of the terminal device 130. When the indication message 1 includes the buffer notification of the first service, the terminal device 130 determines that the access network device 110 indicates to buffer the first service. When the indication message 1 includes the buffer duration of the first service, the terminal device 130 determines that the access network device 110 indicates to buffer the first service, and determines the buffer duration.

The indication message 1 may include one or more of the foregoing information. For example, the indication message 1 includes the status information of the network and the buffer notification of the first service, or the indication message 1 includes the status information of the network and the buffer duration of the first service. This is not limited herein. It should be noted that, when the access network device 110 does not indicate the buffer duration to the terminal device 130, the terminal device 130 may determine the buffer duration based on the requirement of the terminal device 130. This is not limited herein.

In a possible implementation, the status information of the network between the terminal device 130 and the access network device 110 may include but is not limited to: physical resource allocation, channel interference, link quality, network resource consumption, or the like. In this way, the terminal device 130 may determine, based on one or more of the foregoing parameters, whether to buffer the first service.

In conclusion, the access network device indicates the terminal device to buffer a service from the server. In this way, the terminal device may determine, based on the indication from the access network device, to buffer the service. This can effectively avoid too early or too late buffering, thereby supporting the terminal device in more appropriately buffering the service.

Specifically, because the access network device 110 is responsible for providing a network service for the terminal device 130, and compared with the terminal device 130, the access network device 110 is more clearly aware of coverage, consumption of resources, load, and interference of the network between the access network device 110 and the terminal device 130, the access network device 110 may predetermine, based on a location of the terminal device 130, whether the network can continue to provide service transmission for the terminal device 130. If determining that the network cannot continue to provide service transmission for the terminal device 130, the access network device 110 sends the indication message 1, and the terminal device 130 determines, based on the indication message 1, that the first service needs to be buffered, thereby effectively avoiding too early or too late buffering and the like.

In addition, the communication system 100 may be used in the following systems or scenarios: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system or NR, a system evolved after 5G such as a 6G system, and a non-terrestrial network (non-terrestrial network, NTN) system such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solution disclosed in the communication system 100 is applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solution is applicable to an LTE FDD/LTE TDD system. The technical solution disclosed in the communication system 100 is applicable to a low-frequency scenario (sub 6G), and also applicable to a high-frequency scenario (above 6 GHz), terahertz, optical communication, and the like.

In addition, the technical solution disclosed in the communication system 100 may also be applied to a scenario in which the terminal device is connected to a single base station. The base station connected to the terminal device 130 and a core network (core network, CN) connected to the base station are of a same standard. For example, if the CN is a 5G core, the corresponding base station is a 5G base station, and the 5G base station is directly connected to the 5G core; or if the CN is a 6G core, the base station is a 6G base station, and the 6G base station is directly connected to the 6G core.

The technical solution disclosed in the communication system 100 may also be applicable to a macro-micro scenario formed by base stations in different forms in a communication network. For example, the base station may be a satellite, an air balloon station, or an uncrewed aerial vehicle station. The technical solution disclosed in the communication system 100 is also applicable to a scenario in which both a wide-coverage base station and a small-coverage base station exist. The technical solution disclosed in the communication system 100 may be applied to a scenario in which there is a high-reliability service requirement, for example, a port scenario, an industrial manufacturing scenario, a transportation scenario, or a coal mine scenario. The technical solution disclosed in the communication system 100 may be further applied to 5.5G, 6G, and a wireless communication system after 6G. An applicable scenario includes but is not limited to terrestrial cellular communication, NTN, satellite communication, high altitude platform station (high altitude platform station, HAPS) communication, V2X, integrated access and backhaul (integrated access and backhaul, IAB), reconfigurable intelligent surface (reconfigurable intelligent surface, RIS) communication, and the like.

The following uses an example in which the communication system 100 is used in a 5G network architecture for description. FIG. 2 is a diagram of a 5G network architecture in which a communication system 100 is used. As shown in (a) in FIG. 2, the 5G network architecture 200 may include the following network elements.

### 1. Access and mobility management function (access and mobility management function, AMF) network element

The AMF mainly performs functions such as mobility management, or access authentication/authorization. In addition, the AMF is further responsible for transferring a user policy between a terminal device and a policy control function (policy control function, PCF) network element. In addition, the AMF may receive non-access stratum (non-access stratum, NAS) signaling (including mobility management (mobility management, MM) signaling and session management (session management, SM) signaling) of the terminal device and related signaling of an access network device (for example, next generation (next generation, NG) 2 interface signaling, of a base station granularity, exchanged with the AMF), to complete a user registration procedure, SM signaling forwarding, and mobility management.

### 2. Session management function (session management function, SMF) network element

The SMF is mainly configured for session management, internet protocol (internet protocol, IP) address allocation and management of the terminal device, selection and management of an endpoint of a user plane function and a policy control and charging function interface, downlink data notification, or the like. The SMF may be further configured to complete a procedure, for example, establishment, release, or update, related to a protocol data unit (protocol data unit, PDU) session.

### 3. PCF

The PCF may be responsible for user policy management, including a mobility-related policy and a PDU session-related policy, for example, a QoS policy or a charging policy.

### 4. Unified data repository (unified data repository, UDR) network element

The UDR mainly includes the following functions: (1) The UDR is used by a UDM to store subscription data or read the subscription data; (2) the UDR is used by a PCF to store policy data or read the policy data; and (3) the UDR stores exposed data or the exposed data is read from the UDR.

The UDR and a network function (network function, NF) that accesses the UDR have a same PLMN, that is, in a same network. In other words, an Nudr interface is an internal interface of the PLMN.

### 5. Unified data management (unified data management, UDM) network element

The UDM mainly includes the following functions: unified data management, support for authentication credential processing in a 3GPP authentication and key agreement mechanism, user identity processing, access authorization, registration and mobility management, subscription management, short message management, and the like.

### 6. Application function (application function, AF) network element

The AF mainly includes the following functions: interacting with a 3GPP core network to provide a business or a service, including interacting with an NEF, interacting with a policy architecture, and the like.

### 7. User plane function (user plane function, UPF) network element

The UPF is used as an interface to a data network, and implements functions such as user plane data forwarding, session/flow level-based charging statistics collection, and bandwidth limitation, that is, packet routing and forwarding, QoS handling for user plane data, and the like.

### 8. (Radio) access network (radio access network, (R)AN) device

The (R)AN can manage radio resources, provide an access service for the terminal device, and complete forwarding of data of the terminal device between the terminal device and a core network. The (R)AN may also be understood as a base station. For details, refer to the foregoing descriptions.

### 9. Data network (data network, DN) network element

The DN is configured to provide, for example, an operator service, an internet access service, or a third-party service, and includes a server, where a server side implements video source coding, rendering, and the like.

### 10. Network repository function (network repository function, NRF) network element

The NRF is responsible for maintaining network element service information, supporting receiving of a network element registration service, and returning target network element service information based on a network element discovery request. Because the NRF may have interfaces with all service-based network elements (for example, the AMF, SMF, and PCF) in the foregoing architecture, the interfaces are not shown in the figure.

In the foregoing descriptions, the network elements may be network elements in a hardware device, software functions running on dedicated hardware, or virtualization functions instantiated on a platform (for example, a cloud platform). One or more services may be obtained through division into the foregoing function network elements. Further, there may be a service independent of a network function. An instance of the foregoing function network element, an instance of a service included in the foregoing function network element, or an instance of a service independent of a network function may be referred to as a service instance.

The access network device 110 in the communication system 100 is the RAN network element in FIG. 2, the terminal device 130 is UE in FIG. 2, the core network device 140 is a network element such as an SMF, an AMF, or a UPF in FIG. 2, and the server 120 is the DN in FIG. 2.

It can be learned from (a) in FIG. 2 that, the terminal device accesses a 5GS via the access network device; the terminal device communicates with the AMF through an NG1 interface (N1 for short); the access network device communicates with the AMF through an NG2 interface (N2 for short); the access network device communicates with the UPF through an NG3 interface (N3 for short); the AMF communicates with the SMF through an NG11 interface (N11 for short); the AMF communicates with the UDM through an NG8 interface (N8 for short); the AMF communicates with the PCF through an NG15 interface (N15 for short); the SMF communicates with the PCF through an NG7 interface (N7 for short); the SMF communicates with the UPF through an NG4 interface (N4 for short); the UPF accesses the DN through an NG6 interface (N6 for short); the UDM communicates with the UDR through an NG35 interface (N35 for short); the PCF communicates with the UDR through an NG36 interface (N36 for short), and the like.

Interfaces between control plane network elements in (a) in FIG. 2 are point-to-point interfaces. During actual implementation, the interfaces between the control plane network elements may alternatively be service-based interfaces shown in (b) in FIG. 2. In (b) in FIG. 2, Npcf, Nudr, Nudm, Naf, Namf, and Nsmf are respectively service-based interfaces provided by the PCF, the UDR, the UDM, the AF, the AMF, and the SMF, and are configured to invoke corresponding service-based operations.

Names of the network elements shown in (a) in FIG. 2 or (b) in FIG. 2 are merely names, and the names constitute no limitation on functions of the network elements. In a 5G network and another future network, the foregoing network elements may alternatively have other names. This is not specifically limited in embodiments of this application. For example, in a 6G network, some or all of the foregoing network elements may still use terms in 5G, or may have other names. Centralized descriptions are provided herein, and details are not described below.

The 5G network structure shown in FIG. 2 is merely an example for description. The 5G network structure shown in FIG. 2 may further include another network element that is not mentioned, for example, an AUSF and a network exposure function (network element function, NEF) network element.

In addition, the "network element" in this specification may also be referred to as a network function instance (network function instance), an NF, a device, an apparatus, a module, or the like. This is not particularly limited in this application. In addition, the foregoing names are defined only for ease of distinguishing between different functions, and should not constitute any limitation. This application does not exclude a possibility that another name is used in the 5G network and another future network. For example, in the 6G network, some or all of the foregoing networks may still use terms in 5G, or may use other names. Names of the interfaces between the network elements are merely examples, and the names of the interfaces may be other names in a specific implementation. This is not specifically limited in this application. In addition, names of messages (or signaling) transmitted between the foregoing network elements are merely examples, and do not constitute any limitation on functions of the messages.

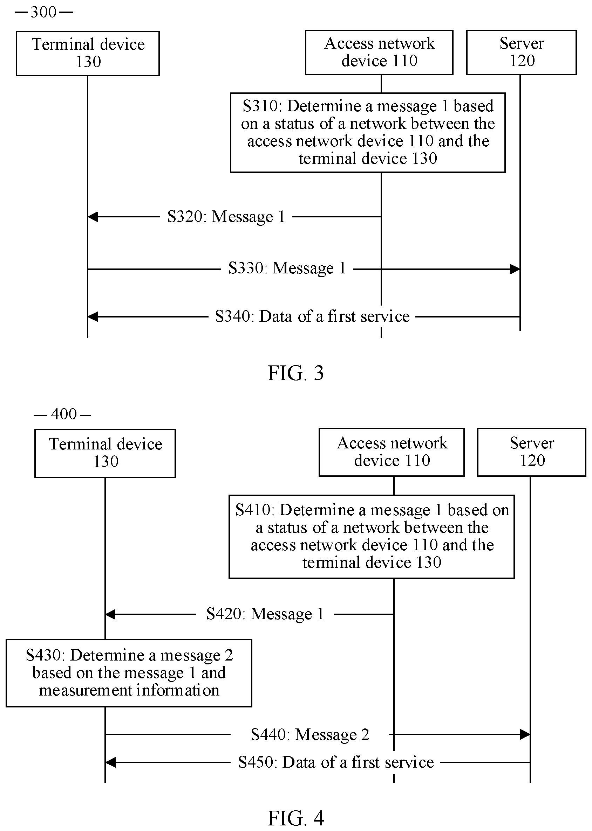

The following further describes interaction between the access network device 110 and the terminal device 130 with reference to FIG. 3.

### II. Communication method

FIG. 3 is a schematic interaction flowchart of a communication method 300 according to an embodiment of this application. The method shown in FIG. 3 may be performed by an access network device 110, a terminal device 130, and a server 120, or may be performed by modules and/or components (for example, chips or integrated circuits) that have corresponding functions and that are installed in the access network device 110, the terminal device 130, and the server 120. This is not limited herein. In the following descriptions, the access network device 110, the terminal device 130, and the server 120 are used as examples for description. As shown in FIG. 3, the method 300 includes the following steps.

S310: The access network device 110 determines a message 1 (for example, the foregoing indication message 1) based on a status of a network between the access network device 110 and the terminal device 130.

The access network device 110 serves as a device that provides a network service for the terminal device 130. To be specific, the server 120 needs to transmit a first service to the terminal device 130 via the access network device 110, and the access network device 110 is clearly aware of a change in the status of the network between the access network device 110 and the terminal device 130. When the access network device 110 determines, based on the status of the network between the access network device 110 and the terminal device 130, the message 1 indicating the terminal device 130 to buffer the first service, this application supports effectively avoiding a case in which the terminal device 130 buffers the first service too early or too late.

In a possible implementation, the message 1 is an indication message of one or more bits (which may be a buffer notification of the first service, and details are not described below). For example, one bit is used, and the bit is 0, indicating that the first service needs to be buffered; or one bit is used, and the bit is 1, indicating that the first service needs to be buffered. This is not limited.

In another possible implementation, the message 1 includes an indication message of one or more bits, and buffer duration of the first service. For example, the access network device 110 may indicate, based on the indication message in the message 1, the terminal device 130 to buffer the first service, and indicate specific buffer duration of the first service to the terminal device 130 based on the buffer duration of the first service in the message 1.

In still another possible implementation, the message 1 is status information of the network between the access network device 110 and the terminal device 130. The foregoing information may help the terminal device 130 determine whether the first service needs to be buffered. In this way, the terminal device 130 may determine, based on one or more of the foregoing information, whether the first service needs to be buffered.

Specifically, the access network device 110 may determine information like the buffer notification of the first service and the buffer duration of the first service based on the status information of the network between the access network device 110 and the terminal device 130, and may send the information like the buffer notification of the first service and the buffer duration of the first service to the terminal device 130. Alternatively, the access network device 110 may directly send the status information of the network to the terminal device 130.

In conclusion, the access network device 110 may indicate, based on one or more of the foregoing information, the terminal device 130 to buffer the first service.

S320: The access network device 110 sends the message 1 to the terminal device 130.

Correspondingly, the terminal device 130 receives the message 1.

S330: The terminal device 130 sends the message 1 to the server 120.

Correspondingly, the server 120 receives the message 1.

Specifically, after receiving the message 1 from the access network device 110, the terminal device 130 directly sends the message 1 to the server 120. More specifically, the terminal device 130 sends the message 1 to the server 120 through a message channel at an application layer.

In conclusion, the message 1 can also be used for requesting to buffer the first service, and the terminal device 130 may directly forward the message 1 to the server 120, so that processing the message 1 by the terminal device 130 can be avoided, thereby reducing power consumption of the terminal device 130.

When the message 1 includes the buffer notification of the first service, the server 120 determines, based on the buffer notification of the first service, that data of the first service corresponding to a certain timing advance (whose value may be determined by the server 120 or may be preconfigured) needs to be sent to the terminal device 130 in advance. When the message 1 includes the buffer duration of the first service, the server 120 determines, based on the buffer duration of the first service, that data of the first service corresponding to a certain timing advance (which may correspond to the buffer duration or may be greater than the buffer duration) needs to be sent to the terminal device 130 in advance. When the message 1 includes the status information of the network, the server 120 determines, based on the status information of the network, that data of the first service corresponding to a certain timing advance (whose value may be determined by the server 120 or may be preconfigured) needs to be sent to the terminal device 130 in advance.

S340: The server 120 sends the data of the first service to the terminal device 130.

Correspondingly, the terminal device 130 receives the data of the first service from the server 120.

Specifically, the server 120 may determine, based on the message 1, that the data of the first service corresponding to a certain timing advance needs to be sent to the terminal device 130, and when the network is good, may send the data of the first service to the terminal device 130 via the access network device 110.

The access network device indicates the terminal device to buffer the first service. In this way, the terminal device may determine, based on the indication from the access network device, that the first service needs to be buffered. This can effectively avoid too early or too late buffering, thereby supporting the terminal device in more appropriately buffering the first service. For example, the terminal device buffers the service neither too early nor too late, and buffer duration of the service is neither too long nor too short.

Content in the method 300 is described by using an example in which the terminal device 130 directly forwards, to the server 120, the message 1 from the access network device 110, but this imposes no limitation. For details, refer to FIG. 4.

FIG. 4 is a schematic interaction flowchart of a communication method 400 according to an embodiment of this application. The method shown in FIG. 4 may be performed by an access network device 110, a terminal device 130, and a server 120, or may be performed by modules and/or components (for example, chips or integrated circuits) that have corresponding functions and that are installed in the access network device 110, the terminal device 130, and the server 120. This is not limited herein. In the following descriptions, the access network device 110, the terminal device 130, and the server 120 are used as examples for description. As shown in FIG. 4, the method 400 includes the following steps.

S410: The access network device 110 determines a message 1 based on a status of a network between the access network device 110 and the terminal device 130.

For descriptions of S410, refer to the foregoing descriptions of S310. Details are not described herein again.

S420: The access network device 110 sends the message 1 to the terminal device 130.

Correspondingly, the terminal device 130 receives the message 1.

S430: The terminal device 130 determines a message 2 (which may be the foregoing buffer request message) based on the message 1 and measurement information.

Specifically, after receiving the message 1, the terminal device 130 may perform comprehensive processing based on the measurement information obtained by the terminal device 130 by measuring the network between the access network device 110 and the terminal device 130 (for example, a signal to interference plus noise ratio (signal to interference plus noise ratio, SINR), and reference signal received strength (reference signal received power, RSRP)) and the message 1, to obtain a message 2. The message 2 is used for requesting to buffer a first service. In this way, the terminal device 130 can obtain a more accurate buffer indication.

It should be noted that, when the message 1 includes a buffer notification of the first service, the message 2 may include one or both of the buffer notification of the first service and second buffer duration of the first service; when the message 1 includes first buffer duration of the first service, the message 2 may include one or both of a buffer notification of the first service and second buffer duration of the first service; or when the message 1 includes status information of the network, the message 2 may include one or both of a buffer notification of the first service and second buffer duration of the first service.
S440: The terminal device 130 sends the message 2 to the server 120.

Correspondingly, the server 120 receives the message 2.

For descriptions of S440, refer to the foregoing descriptions of S330. Details are not described herein again.

It should be noted that the message 2 may further carry information like a current buffer status of the terminal device 130 for the first service, a current processing status of the first service, a bit rate, and resolution. The foregoing information helps the server 120 determine a parameter, for example, a specific buffer time amount.

When the buffer request message includes the buffer notification of the first service, the terminal device 130 indicates to the server 120 that the first service is to be buffered, and the server 120 may send a certain amount of data to the terminal device 130 in advance based on the buffer notification. When the buffer request message includes the buffer duration of the first service, the terminal device 130 may indicate information about specific buffer duration to the server 120, and the server 120 may send, to the terminal device 130 based on the buffer duration, an amount of data corresponding to the buffer duration.

S450: The server 120 sends the data of the first service to the terminal device 130.

For descriptions of S450, refer to the foregoing descriptions of S340. Details are not described herein again.

According to the foregoing solution, the terminal device may more appropriately buffer the service. For example, the terminal device buffers the service neither too early nor too late, and buffer duration of the service is neither too long nor too short.

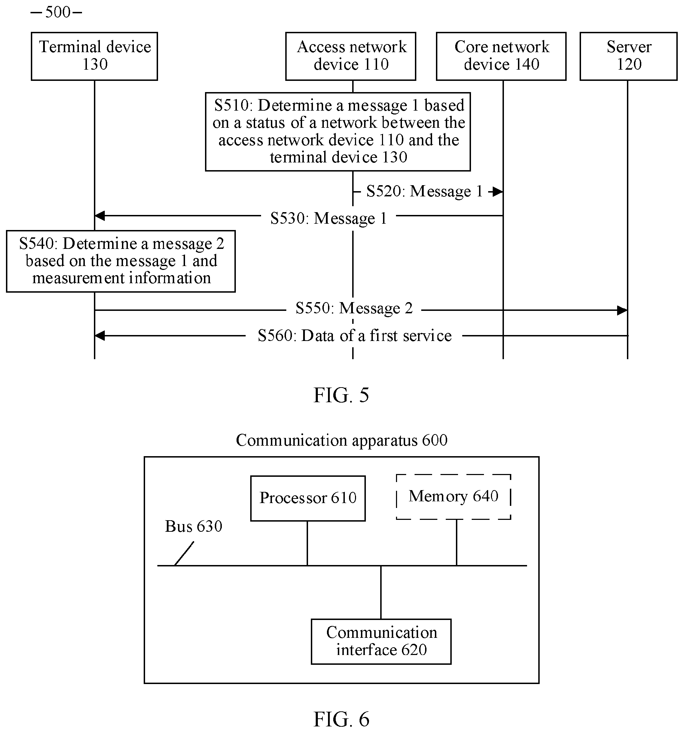

The method 300 and the method 400 are described by using an example in which the access network device 110 directly sends the message 1 to the terminal device 130. However, the access network device 110 may not directly send the message 1 to the terminal device 130. For details, refer to FIG. 5.

FIG. 5 is a schematic interaction flowchart of a communication method 500 according to an embodiment of this application. The method shown in FIG. 5 may be performed by an access network device 110, a terminal device 130, a server 120, and a core network device 140, or may be performed by modules and/or components (for example, chips or integrated circuits) that have corresponding functions and that are installed in the access network device 110, the terminal device 130, the server 120, and the core network device 140. This is not limited herein. In the following descriptions, the access network device 110, the terminal device 130, the server 120, and the core network device 140 are used as examples for description. As shown in FIG. 5, the method 500 includes the following steps.

S510: The access network device 110 determines a message 1 based on a status of a network between the access network device 110 and the terminal device 130.

For descriptions of S510, refer to the foregoing descriptions of S310. Details are not described herein again.

S520: The access network device 110 sends the message 1 to the core network device 140.

Correspondingly, the core network device 140 receives the message 1.

S530: The core network device 140 sends the message 1 to the terminal device 130.

Correspondingly, the terminal device 130 receives the message 1.

S540: The terminal device 130 determines a message 2 based on the message 1 and measurement information.

For descriptions of S540, refer to the foregoing descriptions of S430. Details are not described herein again.

S550: The terminal device 130 sends the message 2 to the server 120.

Correspondingly, the server 120 receives the message 2.

S560: The server 120 sends data of a first service to the terminal device 130.

For descriptions of S560, refer to the foregoing descriptions of S340. Details are not described herein again.

According to the foregoing solution, the terminal device may more appropriately buffer the service. For example, the terminal device buffers the service neither too early nor too late, and buffer duration of the service is neither too long nor too short.

In the method 500, the access network device 110 sends the message 1 to the core network device 140, and then the core network device 140 sends the message 1 to the terminal device 130. This can avoid modification to an air interface message.

In the method 500, the terminal device 130 may alternatively directly send the message 1 to the server 120. For details, refer to the content described in FIG. 3. The details are not described again.

In the method 300 to the method 500, this application supports the terminal device 130 in sending, to the access network device 110, a request message used for requesting to obtain the message 1. In this way, the access network device 110 may send the message 1 to the terminal device 130 based on the request message sent by the terminal device 130.

The request message may be a network information service subscription message, and is used for requesting the message 1 from the access network device 110. The terminal device 130 and the access network device 110 may agree on content and a form of the status-related information of the network and that is provided by the access network device 110 for the terminal device 130. The access network device 110 may directly predetermine, based on the various status information, that the first service needs to be buffered and may estimate the buffer duration. Alternatively, the access network device 110 may transfer the status information of the network to the terminal device 130, and the terminal device 130 performs, comprehensively based on the status information of the network and the measurement information obtained by the terminal device 130, determining and calculation for buffering the first service.

According to the foregoing method embodiments, in embodiments of this application, the access network device 110 indicates the terminal device 130 to buffer the first service. In this way, the terminal device 130 may determine, based on the indication from the access network device 110, that the first service needs to be buffered. This can effectively too early or too late buffering, thereby supporting the terminal device 130 in more appropriately buffering the first service.

### III. Communication apparatus

Finally, apparatus embodiments in embodiments of this application are described.

To implement functions in the methods provided in this application, a sending device and a sending device each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 6 is a block diagram of a communication apparatus 600 according to an embodiment of this application. The communication apparatus 600 includes a processor 610 and a communication interface 620. The processor 610 and the communication interface 620 may be connected to each other through a bus 630. The communication apparatus 600 may be an access network device 110 or a terminal device 130.

Optionally, the communication apparatus 600 may further include a memory 640. The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is used for related instructions and data.

The processor 610 may be one or more CPUs. When the processor 610 is one CPU, the CPU may be a single-core CPU or a multi-core CPU.

When the communication apparatus 600 is the access network device 110, for example, the processor 610 is configured to perform the following operations: determining an indication message 1 based on a status of a network between the access network device 110 and the terminal device 130; and sending the indication message 1 to the terminal device 130.

When the communication apparatus 600 is the terminal device 130, for example, the processor 610 is configured to perform the following operations: receiving an indication message 1; and sending the indication message 1 or a buffer request message 1 to a server 120.

The foregoing content is merely used as an example for description. When the communication apparatus 600 is the access network device 110/terminal device 130, the communication apparatus 600 is responsible for performing the methods or the steps related to the access network device 110/terminal device 130 in the foregoing method embodiments.

The foregoing descriptions are merely examples. For specific content, refer to the content shown in the foregoing method embodiments. For an implementation of each operation in FIG. 6, refer to corresponding descriptions in the method embodiments shown in FIG. 3 to FIG. 5.

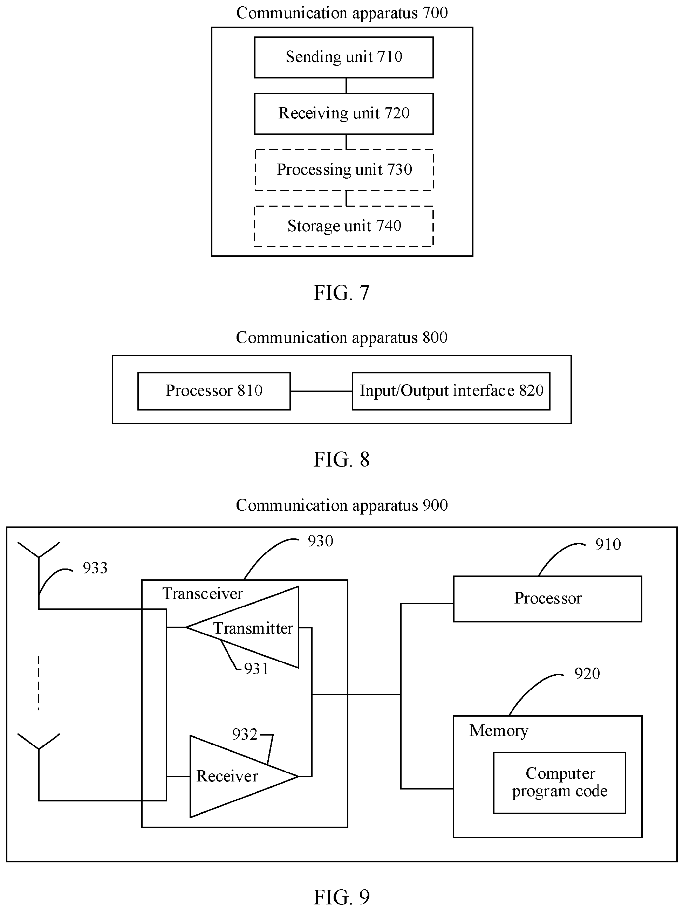

FIG. 7 is a block diagram of a communication apparatus 700 according to an embodiment of this application. The communication apparatus 700 may be an access network device 110 or a terminal device 130, or may be a chip or a module in the access network device 110 and the terminal device 130, and is configured to implement the method in the foregoing embodiments. The communication apparatus 700 includes a transceiver unit 710 and a processing unit 720. The following describes the transceiver unit 710 and the processing unit 720 by using examples.

The transceiver unit 710 may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. Centralized descriptions are provided herein, and details are not described below.

When the communication apparatus 700 is the access network device 110, for example, the transceiver unit 710 is configured to send an indication message 1 to the terminal device 130; and the processing unit 720 is configured to determine the indication message 1 based on a status of a network between the access network device 110 and the terminal device 130.

When the communication apparatus 700 is the terminal device 130, for example, the transceiver unit 710 is configured to receive an indication message 1, and is further configured to send a buffer request message 1 or the indication message 1 to a server 120; and the processing unit 720 is configured to determine the buffer request message 1 based on the indication message 1.

The foregoing content is merely used as an example for description. When the communication apparatus 700 is the access network device 110/terminal device 130, the communication apparatus 700 is responsible for performing the methods or the steps related to the access network device 110/terminal device 130 in the foregoing method embodiments.

Optionally, the communication apparatus 700 further includes a storage unit 730. The storage unit 730 is configured to store a program or code used for performing the foregoing methods.

The apparatus embodiments shown in FIG. 6 and FIG. 7 are used for implementing the content described in FIG. 3 to FIG. 5. For specific execution steps and methods of the apparatuses shown in FIG. 6 and FIG. 7, refer to the content described in the foregoing method embodiments.

FIG. 8 is a block diagram of a communication apparatus 800 according to an embodiment of this application. The communication apparatus 800 is configured to implement functions of an access network device 110 or a terminal device 130. The communication apparatus 800 may be a chip in the access network device 110 or the terminal device 130.

The communication apparatus 800 includes an input/output interface 820 and a processor 810. The input/output interface 820 may be an input/output circuit. The processor 810 may be a signal processor, a chip, or another integrated circuit that can implement the methods in this application. The input/output interface 820 is configured to input or output a signal or data.

For example, when the communication apparatus 800 is the access network device 110, the input/output interface 820 is configured to send an indication message 1 to the terminal device 130. The processor 810 is configured to determine the indication message 1 based on a status of a network between the access network device 110 and the terminal device 130.

For example, the communication apparatus 800 is the terminal device 130, and the input/output interface 820 is configured to receive the indication message 1. The processor 810 is configured to determine a buffer request message 1 based on the indication message 1.

In a possible implementation, the processor 810 executes instructions stored in a memory, to implement the functions implemented by the network device or the terminal device.

Optionally, the communication apparatus 800 further includes the memory.

Optionally, the processor and the memory are integrated together.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that can implement the methods in embodiments of this application.

The foregoing descriptions of the communication apparatus 800 are merely an example for description. The communication apparatus 800 can be configured to perform the methods in the foregoing embodiments. For specific content, refer to the descriptions of the foregoing method embodiments. Details are not described herein again.

FIG. 9 is a block diagram of a communication apparatus 900 according to an embodiment of this application. The communication apparatus 900 may be an access network device 110 or a chip. The communication apparatus 900 may be configured to perform operations performed by the access network device 110 in the method embodiments shown in FIG. 3 and FIG. 5.

When the communication apparatus 900 is the access network device 110, for example, a base station, FIG. 9 is a diagram of a simplified structure of the base station. The base station includes a module 910, a module 920, and a module 930. The module 910 is mainly configured to: perform baseband processing, control the base station, and the like. The module 910 is usually a control center of the base station, may be usually referred to as a processor, and is configured to control the base station to perform a processing operation on a network device side in the foregoing method embodiments. The module 920 is mainly configured to store computer program code and data. The module 930 is mainly configured to: send and receive radio frequency signals, and perform conversion between the radio frequency signal and a baseband signal. The module 930 may be usually referred to as a transceiver module, a transceiver machine, a transceiver circuit, a transceiver, or the like. The transceiver module in the module 930 may also be referred to as a transceiver machine, a transceiver, or the like. The transceiver module includes an antenna 933 and a radio frequency circuit (not shown in FIG. 9). The radio frequency circuit is mainly configured to perform radio frequency processing. Optionally, a component for implementing a receiving function in the module 930 may be considered as a receiver, and a component configured to implement a sending function may be considered as a transmitter. In other words, the module 930 includes a receiver 932 and a transmitter 931. The receiver may also be referred to as a receiving module, a receiver device, a receiver circuit, or the like. The transmitter may be referred to as a transmitting module, a transmitter device, a transmitter circuit, or the like.

The module 910 and the module 920 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, or the plurality of boards share one or more memories, or the plurality of boards share one or more processors at the same time.

For example, in an implementation, the transceiver module in the module 930 is configured to perform a sending and receiving-related process performed by the access network device 110 in the embodiments shown in FIG. 3 to FIG. 5. The processor in the module 910 is configured to perform a processing-related process performed by the access network device 110 in the embodiments shown in FIG. 3 to FIG. 5.

In another implementation, the processor in the module 910 is configured to perform a processing-related process performed by a communication device in the embodiments shown in FIG. 3 to FIG. 5.

In another implementation, the transceiver module in the module 930 is configured to perform a sending and receiving-related process performed by a communication device in the embodiments shown in FIG. 3 to FIG. 5.

It should be understood that, FIG. 9 is merely an example rather than a limitation. The access network device 110 including the processor, the memory, and the transceiver may not depend on the structures shown in FIG. 6 to FIG. 8.

When the communication apparatus 900 is the chip, the chip includes a transceiver, a memory, and a processor. The transceiver may be an input/output circuit or a communication interface. The processor is a processor, a microprocessor, or an integrated circuit integrated on the chip. A sending operation performed by a network device in the foregoing method embodiments may be understood as an output of the chip, and a receiving operation performed by the network device in the foregoing method embodiments may be understood as an input of the chip.

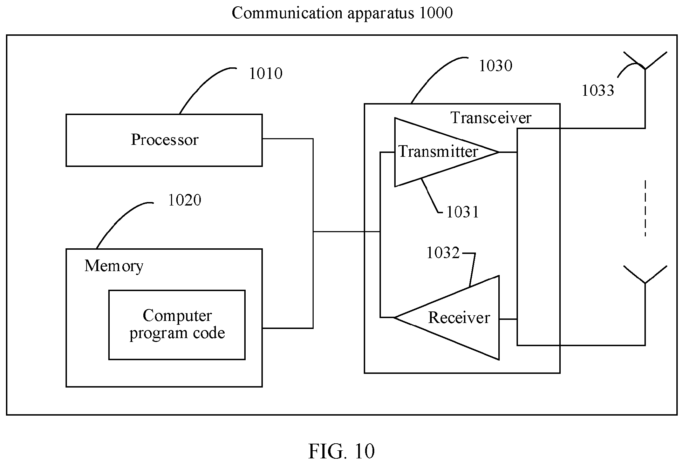

FIG. 10 is a block diagram of a communication apparatus 1000 according to an embodiment of this application. The communication apparatus 1000 may be a terminal device 130, or a processor or a chip of the terminal device 130. The communication apparatus 1000 may be configured to perform operations performed by the terminal device 130 or a communication device in the foregoing method embodiments.

When the communication apparatus 1000 is the terminal device 130, FIG. 10 is a diagram of a simplified structure of the terminal device. As shown in FIG. 10, the terminal device includes a processor, a memory, and a transceiver. The memory may store computer program code. The transceiver includes a transmitter 1031, a receiver 1032, a radio frequency circuit (not shown in FIG. 10), an antenna 1033, and an input/output apparatus (not shown in FIG. 10).

The processor is mainly configured to: process a communication protocol and communication data, control the terminal device, execute a software program, process data of the software program, and the like. The memory is mainly configured to store a software program and data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into the baseband signal, and outputs the baseband signal to the processor. The processor converts the baseband signal into data, and processes the data. For ease of description, FIG. 10 merely shows one memory, one processor, and one transceiver. In an actual terminal device product, there may be one or more processors and one or more memories. The memory may also be referred to as a storage medium, a storage device, or the like. The memory may be disposed independently of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 10, the terminal device includes a processor 1010, a memory 1020, and a transceiver 1030. The processor 1010 may also be referred to as a processing unit, a processing board, a processing module, a processing apparatus, or the like. The transceiver 1030 may also be referred to as a transceiver unit, a transceiver machine, a transceiver apparatus, or the like.

Optionally, a component for implementing a receiving function in the transceiver 1030 may be considered as a receiving module, and a component for implementing a sending function in the transceiver 1030 may be considered as a sending module. That is, the transceiver 1030 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1010 is configured to perform processing actions on a side of the terminal device 130 in the embodiments shown in FIG. 3 to FIG. 5, and the transceiver 1030 is configured to perform sending and receiving actions on the side of the terminal device 130 in FIG. 3 to FIG. 5.

For example, in an implementation, the processor 1010 is configured to perform processing actions on a side of the terminal device 130 in the embodiments shown in FIG. 3 to FIG. 5, and the transceiver 1030 is configured to perform sending and receiving actions on the side of the terminal device 130 in FIG. 3 to FIG. 5.

It should be understood that FIG. 10 is merely an example rather than a limitation. The terminal device including the transceiver module and the processing module may not depend on the structures shown in FIG. 6 to FIG. 8.

When the communication apparatus 1000 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory. The memory is configured to store a computer program or code.

This application further provides a processor. The processor is configured to be coupled to a memory, and configured to perform the method and the function of the network device or the terminal device in any one of the foregoing embodiments.

This application provides a computer program product including instructions. When the computer program product runs on a computer, the methods in the foregoing embodiments are implemented.

This application further provides a computer program. When the computer program is run on a computer, the methods in the foregoing embodiments are implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the foregoing described apparatus embodiment is merely an example. For example, the unit division is merely logical function division, and another division manner may be used during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method embodiments in this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
determining an indication message based on a status of a network between an access network device and a terminal device, wherein the indication message indicates the terminal device to buffer a first service; and
sending the indication message to the terminal device.

2. The method according to claim 1, wherein the indication message comprises at least one of the following:
status information of the network, a buffer notification of the first service, or buffer duration of the first service.

3. The method according to claim 1 or 2, wherein the method further comprises:
receiving a request message used for requesting the indication message.

4. The method according to claim 2 or 3, wherein the status information of the network comprises at least one of the following:
physical resource allocation, channel interference, link quality, or network resource consumption.

5. The method according to any one of claims 1 to 4, wherein the first service is a service provided by a server for the terminal device.

6. The method according to any one of claims 1 to 5, wherein the indication message is further used for requesting to buffer the first service.

7. A communication method, comprising:
receiving an indication message, wherein the indication message indicates a terminal device to buffer a first service, and the first service is a service provided by a server for the terminal device; and
sending a buffer request message to the server, wherein the buffer request message is used for requesting to buffer the first service, and the buffer request message is determined based on the indication message; or
sending the indication message to the server, wherein the indication message is further used for requesting to buffer the first service.

8. The method according to claim 7, wherein that the buffer request message is determined based on the indication message comprises:
the buffer request message is determined based on the indication message and measurement information, wherein the measurement information is information obtained by the terminal device by measuring a status of a network between the terminal device and an access network device.

9. The method according to claim 7 or 8, wherein the buffer request message comprises at least one of the following:
a buffer notification of the first service or first buffer duration of the first service.

10. The method according to any one of claims 7 to 9, wherein the indication message comprises at least one of the following:
status information of the network between the terminal device and the access network device, the buffer notification of the first service, or second buffer duration of the first service.

11. The method according to any one of claims 7 to 10, wherein the receiving the indication message comprises:
receiving the indication message from the access network device, or receiving the indication message from a core network device.

12. The method according to claim 10 or 11, wherein the status information of the network comprises at least one of the following:
physical resource allocation, channel interference, link quality, or network resource consumption.

13. A communication apparatus, comprising a processor, wherein the processor is configured to cause, by executing a computer program or instructions or by using a logic circuit,
the communication apparatus to perform the method according to any one of claims 1 to 6 or the method according to any one of claims 7 to 12.

14. A communication system, comprising an access network device and a server, wherein
the access network device is configured to send an indication message to a terminal device, wherein the indication message indicates the terminal device to buffer a first service, and the first service is a service provided by a server for the terminal device; and
the server is configured to: receive a buffer request message from the terminal device, wherein the buffer request message is used for requesting to buffer the first service; or receive the indication message from the terminal device, wherein the indication message is further used for requesting to buffer the first service.

15. The system according to claim 14, wherein the access network device is further configured to perform the method according to any one of claims 2 to 4.
